# EUROPEAN PATENT SPECIFICATION

(11) **EP 4 362 390 B1**
(45) Date of publication and mention of the grant of the patent: **01.04.2026**
(21) Application number: 22204182.4
(22) Date of filing: 27.10.2022
(51) Int. Cl.: H04L 9/40, G06F 21/50

(54) **METHOD FOR MAINTAINING A STORAGE RESOURCE, APPARATUS, VEHICLE, COMPUTER PROGRAM**
VERFAHREN ZUR AUFRECHTERHALTUNG EINER SPEICHERRESSOURCE, VORRICHTUNG, FAHRZEUG, COMPUTERPROGRAMM
PROCÉDÉ DE MAINTIEN D'UNE RESSOURCE DE STOCKAGE, APPAREIL, VÉHICULE, PROGRAMME INFORMATIQUE

(43) Date of publication of application: 01.05.2024
(73) Proprietor: Bayerische Motoren Werke Aktiengesellschaft, 80809 München (DE)
(72) Inventor: Reinhart, Lukas, 85354 Freising (DE); Knott, Thorsten, 83104 Tuntenhausen (DE); Hippler, Marco, 81541 München (DE)

(56) References cited:
- EP-A1- 3 820 079
- US-A1- 2020 098 049
- US-A1- 2022 234 574
- WEI ZHUO ET AL: "HIBS-KSharing: Hierarchical Identity-Based Signature Key Sharing for Automotive", IEEE ACCESS, vol. 5, 21 August 2017 (2017-08-21), pages 16314 - 16323, XP011660052, [retrieved on 20170906], DOI: 10.1109/ACCESS.2017.2737957

## Description

The present disclosure relates to the field of digital keys. Examples relate to a method for maintaining a storage resource, an apparatus, a vehicle and a computer program.

The Digital Car Key solution defined in the Car Connectivity Consortium's (CCC) standard release 2 ff. standardizes an access system consisting of:
a) smartphone and software that
   i) carry a digital key embedded in secure storage on the smartphone;
   ii) offer interfaces from the secure storage to the smartphone operating system; and
   iii) offer interfaces from the smartphone operating system to other applications running on the smartphone (e.g. a vehicle original equipment manufacturer app);
b) a vehicle, allowing carriers of a digital key to operate certain vehicle functionalities; and
c) backend systems, interconnecting smart devices and vehicles allowing to share and manage digital keys and offer additional services.

Digital keys for a particular vehicle can only be shared by the owner key of the particular vehicle. The Owner Public Key is known to the vehicle through the owner pairing process. Key sharing is a multi-step process, in which the owner (e.g., using user equipment of the owner, also referred to as owner device) first configures the parameters of the digital key to be created ("key creation request") and passes it then to the "friend" (e.g., user equipment of a friend, who should be allowed to use the vehicle, also referred to as friend device). After creation of the key by the friend device and the export of an "endpoint certificate" containing the parameters, the key has been created with, the owner device attests that the key has been created according to the key creation request by signing the endpoint certificate with their private key ("key sharing attestation"). The steps of Key sharing are:
1. Owner device sends a key creation request to a friend device (via a Relay Server);
2. Friend device creates the key in its Secure Element and sends back a key signing request to the owner including the friends certificate chain;
3. Owner device signs request with its endpoint private key; and
4. (Optionally) Friend device sends key tracking request to Key Tracking Server.

The vehicle needs to store information about a digital key of the friend device in the storage resource. The storage resource must be a secure space, such like a secure element. However, size of the storage resource may be limited. Thus, there may be a need to improve a maintaining of a storage resource.

WEI ZHUO ET AL: "HIBS-KSharing: Hierarchical Identity-Based Signature Key Sharing for Automotive discloses a secure storage of car that maintains a white name list, which manages the identities of users, and stores information of the owner O and other authorized users. In order to revoke an authorized user, it simply concerns that the owner O deletes the entry corresponding to that particular user from the car's white name list. Specifically, the owner O sends a revocation requirement of the user's key to KGC which also maintains white name list.

US 2020 / 098 049 A1 discloses an insurance server programmed to terminate sharing of personal data from a vehicle for use in usage-based insurance responsive to a policy termination for the vehicle, send a request to the subscription server to cause the vehicle to purge vehicle memory of personal data, and responsive to confirmation from the subscription server, inform a user of the vehicle of termination of sharing and storage of the personal data.

EP 3 820 079 A1 discloses an operation of managing a certain keys by a digital key framework according to a command to manage the key. The management of the key may also apply to another operation of processing a key, e.g., deleting the key. For example, in order to delete a digital key stored in the electronic device, the service provider server may transmit Keydeletion(deleteAttestation) to the digital key framework of the electronic device instead of the Key- Management(manageAttestation).

US 2022 /234 574 A1 discloses a method for removing user-specific and/or drive-specific user data. The method is based on the fact that these user data are saved distributed on multiple controllers in a motor vehicle. Whereas user-specific user data are directly assigned to a user, or a user identity or user group, "drive-specific user data" means that an indirect inference of at least one person is possible with drive-specific user data since the drive data describe a course of at least one drive and, by using the knowledge about the particular driver and/or vehicle passengers during the drive, information is also provided about the whereabouts of at least one person.

It is therefore a finding that a storage resource can be maintained by deleting usage data after a usage cycle of a vehicle. By deleting the usage data, storage space of the storage resource can be released. For example, a secure element may only provide storage space for a limited number of digital keys. Thus, deleting usage data indicative of the digital key may reduce storage resources needed.

Examples provide a method for maintaining the storage resource of an apparatus according to claim 1.

In an example, the method may further comprise obtaining a deny list indicative of a denied attestation package, for which an access to the vehicle is denied and storing the deny list in the secure element of the apparatus. By obtaining the deny list the apparatus can be enabled to check whether a friend device may receive an access to the vehicle or not. Thus, an access for a non-authorized friend device can be declined in an eased way.

In an example, if the package signal is indicative of the denied attestation package the method may further comprise transmitting, to the user equipment, a delete signal indicative of a deletion of the attestation package. In this way, the apparatus can trigger a deletion of an attestation package, which is not valid.

In an example, the method may further comprise obtaining an allow list indicative of an allowed attestation package, for which an access to the vehicle is allowed and storing the allow list in a storage medium of the apparatus. Using the allow list information about an authorized friend device can be determined. In this way, the second factor authentication can be avoided for friend device for a second approach.

In an example, the method may further comprise receiving, from the user equipment, a second factor signal indicative of the second factor authentication and editing the allow list based on the second factor signal. In this way, the apparatus can maintain the allow list.

In an example, the method may further comprise checking whether the package signal is indicative of an allowed attestation package of the allow list and if the package signal is indicative of an allowed package allowing an assess to the vehicle for the user equipment. In this way, the user equipment can receive access to the vehicle without a need of storing the digital key of the user equipment permanently in the apparatus.

In an example, the method may further comprise receiving information about a deletion of an allowed attestation package, editing the allow list to delete the attestation package from the allow list and editing the deny list to add the attestation package to the deny list. In this way, the apparatus can easily maintain access to the vehicle for the user equipment.

Examples relate to an apparatus, comprising interface circuitry configured to with at least one of a communication device, user equipment or backend and processing circuitry configured to perform a method as described above. Examples relate to a vehicle, comprising an apparatus as described above.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
Fig. 1 shows an example of a method for an apparatus;
Fig. 2 shows a block diagram of an example of an apparatus for a vehicle.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

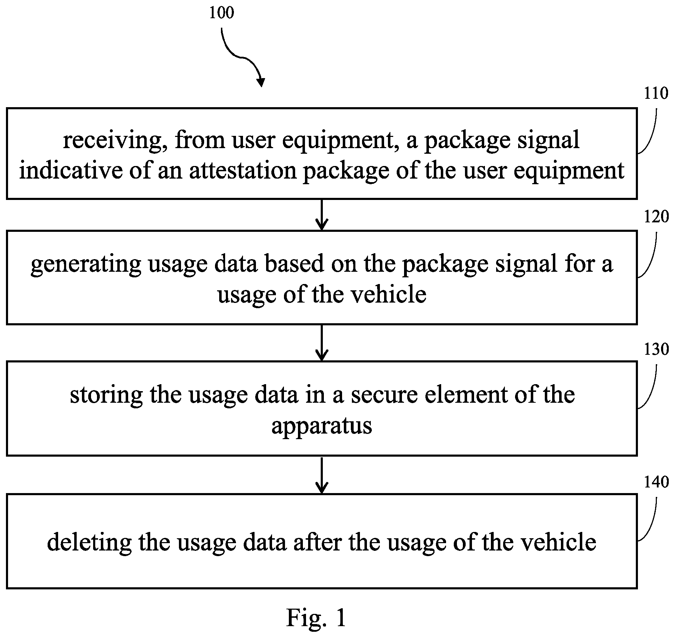

Fig. 1 shows an example of a method 100 for an apparatus. The method 100 for maintaining a storage resource of an apparatus comprises receiving 110, from user equipment, a package signal indicative of an attestation package of the user equipment. The apparatus is configured to allow an assess to a vehicle. The attestation package may comprise information needed for the digital key of the user equipment. For example, the attestation package may comprise a signature of the owner device, a signature of an OEM, a signature of the friend device, access rights of the friend device. For example, as described above a sharing process may be controlled by the owner device. Thus, the attestation package may comprise the signature of the owner device. Alternatively, a sharing process of a digital key for a particular vehicle can be initiated by an owner device or a third-party entity with a relation to a vehicle OEM (backend) and the digital key can be signed by a vehicle OEM (backend) or optionally by the owner device. In this case, the attestation package may comprise a signature of the vehicle OEM (backend) or optionally of the owner device.

Further, the method 100 comprises generating 120 usage data based on the package signal for a usage of the vehicle. The usage data may be indicative of the friend device, an access rights of different device, an identity of the friend device, a slot identifier. For example, the usage data may comprise all information needed to allow the friend device access rights to the vehicle.

Further, the method 100 comprises storing 130 the usage data in a secure element of the apparatus. By storing 130 the usage data in the secure element the friend device may receive access to the vehicle as long as the usage data is stored in the secure element. Thus, the user of the friend device can access the vehicle.

The method 100 also comprises deleting 140 the usage data after the usage of the vehicle. Deleting 140 the usage data releases storage resource of the secure element. In this way, the storage resource may be prevented from becoming too full. By deleting 140 the usage data, the number of digital keys, which can be used for assessing the vehicle, can be increased, in particular indefinitely. Thus, permanently storing of information about the digital keys, e.g., without regard to whether the digital key has been used or not, can be avoided. Therefore storage resource of the apparatus, e.g., the secure element, can be used in a resource saving way.

As described in the CCC standard release during a first contact of the friend device with a vehicle, the vehicle will verify the owner signature of the friend key, using the Owner Public Key, to make sure the presented key is legit. The friend key (digital key of the friend device) is part of the attestation package. After the signature verification the friend key can be used for engine start and will be removed from the private mailbox. For example, the attestation package will be removed from the private mailbox of the friend device. The removal is triggered by the vehicle, e.g., the apparatus. To do so the vehicle needs to store information about the attestation package permanently in the secure element.

In contrast, in method 100 the usage data is deleted after the usage of the vehicle. Thus, after receiving the attestation package comprising the friend key at the first approach of a friend device to the vehicle, the attestation package may be not deleted from the private mailbox of the friend device. For example, the apparatus may not send a signal to the friend device to trigger a deletion of the attestation package associated with the friend key. The attestation package may stay in the private mailbox of the friend device. In this way, the apparatus can request information about the attestation package even for further approaches. Thus, the apparatus can delete the usage data, because by requesting the attestation package during a further approach the apparatus can be enabled to generate the usage data again. In this way, the apparatus can generate the usage data if needed and can delete the usage data if no longer needed. Further, the storage capacity of the friend device can be used to store needed information about the friend key. Therefore, there may be no need for the apparatus to store multiple friend keys for multiple friend devices in the secure element. Instead, each friend device may store its own relevant information about its own friend key.

The method 100 may allow to delete the usage data after an active usage cycle from the storage resource, e.g., a secure storage space of the vehicle such like a secure element. For example, the usage data may comprise friend key data, such like public key, access rights. For example, a usage cycle may be defined by a usage time, a planned route, a distance traveled. The deletion can be done by the apparatus, e.g. processing circuitry of the apparatus. Optionally, the deletion can be triggered by a backend, e.g., a vehicle OEM server via remote command.

Whenever the user wants to use the friend key again, the package signal may be requested by the apparatus. Alternatively, the friend device may transmit the package signal without receiving a request from the apparatus. The package signal can be received by the vehicle. Further the vehicle can verify the attestation package again (e.g., for a second approach), which is part of the package signal. If validation is correct the vehicle could activate the friend key. The validation may require a second factor authentication, e.g., a PIN, answering a call. The second factor authentication may decrease the user experience. To avoid unnecessary second factor authentication an allow list can be used as described below.

In an example, the method 100 may further comprise obtaining a deny list indicative of a denied attestation package, for which an access to the vehicle is denied and storing the deny list in the secure element of the apparatus. For example, the deny list may comprise an attestation package of a friend device or a slot identifier associated with the attestation package for which an access right is expired. In this way, an access to the vehicle can be maintained by maintaining the deny list. For example, by storing a slot identifier of the attestation package and the deny list the size of the deny list can be decreased. The deny list may be stored in a secure storage space, e.g., the secure element. Storing the deny list in a secure storage space may prevent third party from manipulating the deny list. Storing the deny list may use less storage resources as storing usage data indicative of (multiple) friend key(s). In this way, the total amount storage space can be reduced.

In an example, if the package signal is indicative of the denied attestation package the method 100 may further comprise transmitting, to the user equipment, a delete signal indicative of a deletion of the attestation package. By transmitting the delete signal to the user equipment the apparatus can trigger a deletion of the attestation package. For example, the apparatus may receive from a backend information about an expired friend key. If a friend device associated with this friend key approaches the vehicle, the apparatus may recognize that the attestation package of the friend device is no longer valid and may transmit the deletion signal to the friend device. Thus, the friend device can delete the attestation package.

In an example, the method 100 may further comprise obtaining an allow list indicative of an allowed attestation package, for which an access to the vehicle is allowed and storing the allow list in a storage medium of the apparatus. For example, the allow list may comprise an entry for each friend key. The allow list can be used to avoid multiple second factor authentications for the friend device. The allow list may be received from a backend, e.g., the vehicle OEM server. In this way, the apparatus can receive information about friend devices for which an access is allowed. The apparatus may receive a package signal from a friend device and may check whether the attestation package is part of the allow list (e.g., by checking if a slot identifier is part of allow list). If the allow list comprises the attestation package/slot identifier the second factor authentication can be avoided. The apparatus may activate the friend key right away without further necessity of the second factor authentication. For example, the allow list may comprise a slot identifier for a friend device. If a slot identifier for the attestation package can be found in the allow list, the apparatus may activate the friend key.

In an example, the method 100 may further comprise receiving, from the user equipment, second factor signal indicative of the second factor authentication and editing the allow list based on the second factor signal. For example, the apparatus may generate and/or edit the allow list. For example the apparatus may receive the second factor signal may verify the second factor authentication. If the second factor authentication was successful, the apparatus may add an entry, e.g., a slot identifier, to the allow list. In this way, the allow list can be maintained by the apparatus without any need of further communication with the backend. Thus, data traffic can be reduced.

In an example, the method 100 may further comprise checking whether the package signal is indicative of an allowed attestation package of the allow list and if the package signal is indicative of an allowed package allowing an assess to the vehicle for the user equipment. In this way, the friend device can receive access to the vehicle without a need of storing the friend key permanently in the apparatus.

In an example, the method 100 may further comprise receiving information about a deletion of an allowed attestation package, editing the allow list to delete the attestation package or the slot identifier associated with the attestation package from the allow list and editing the deny list to add the attestation package or the slot identifier associated with the attestation package to the deny list. In this way, the apparatus can easily maintain access to the vehicle for the user equipment.

For example, an owner of the vehicle may want to share access rights of the vehicle. The owner may use its owner device to start friend key generation. A friend key can be transmitted to the friend device. The friend key can be tracked and signed at the back end, e.g., at a vehicle OEM server. The vehicle, e.g. the apparatus, may sense for user equipment. When the friend device approaches for the first time the vehicle, the vehicle may recognize the friend device and may transmit a request to receive data from the mailbox of the friend device. The mailbox may comprise attestation package and thus the attestation package may be received by the vehicle. The vehicle may verify the attestation package. The attestation package may comprise a slot identifier which can be also verified by the vehicle, e.g. if the deny list or the allow list comprises the slot identifier. For example, if the allow list does not comprise the slot identifier of the friend device, the vehicle may receive a second factor signal. The vehicle may store indicative of the friend key in the secure storage space. Optionally, the slot identifier of the friend device may be stored in an entry of the allow list. The slot identifier may be stored in a non-permutable rate. A user of the friend device can now access the vehicle may use the vehicle. Optionally, after a usage of the vehicle by the user of the friend device further user of further friend devices may use the vehicle. The vehicle may delete the friend device and optionally delete the further friend devices from the secure storage space to decrease storage needs. As long as the friend device has access to the vehicle, the slot identifier of the friend device may be stored in the allow list. Thus, if the user of the friend device wants to use the vehicle again no second factor authentication may be necessary. The friend device may transmit the package signal during a further approach to the vehicle. The vehicle may verify the attestation package again. Further the vehicle may look up the slot identifier part of the attestation package from the allow list. In this way, the vehicle can activate the friend key right away without further need of the second factor authentication. The user of the friend device may stop using the vehicle again. The user may delete the friend key on the friend device. The vehicle may receive information about the deletion of the friend key in the friend device, e.g. from the friend device, a backend. Thus, the vehicle can delete the slot identifier from the allow list. Optionally, the vehicle can add the slot identifier to the deny list, e.g. in a non-permutable way.

In general, user equipment may be a device that is capable of communicating wirelessly. In particular, however, the user equipment may be a mobile user equipment, e.g., user equipment that is suitable for being carried around by a user. For example, the user equipment may be user Terminal or user Equipment within the meaning of the respective communication standards being used for mobile communication. For example, the user equipment may be a mobile phone, such as a smartphone, or another type of mobile communication device, such as a smartwatch, a laptop computer, a tablet computer, or autonomous augmented-reality glasses.

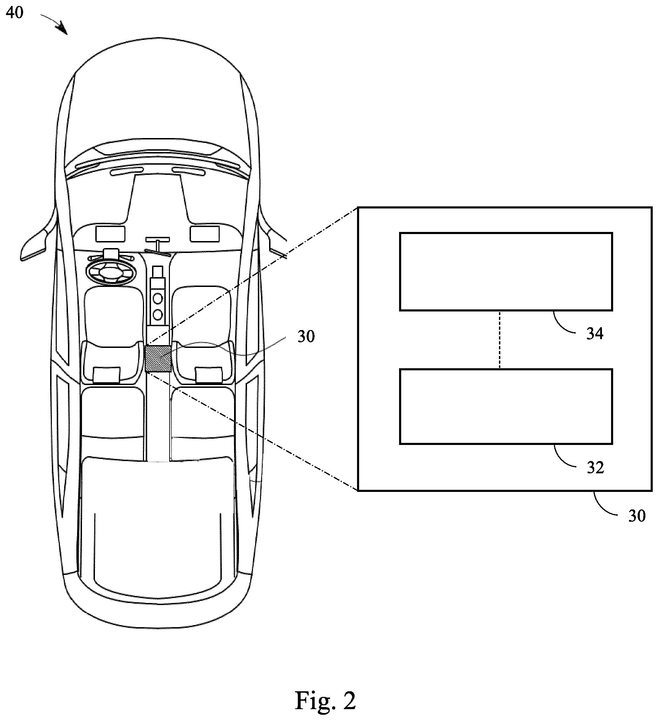

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2).

Fig. 2 shows a block diagram of an example of an apparatus 30 for a vehicle 40. The apparatus 30 comprises interface circuitry 32 configured to communicate with user equipment and processing circuitry 34 configured to perform a method as described above, e.g., the method for an apparatus as described in Fig. 1. For example, the apparatus 30 may be comprised the vehicle 40, e.g., by a control unit of the vehicle 40.

For example, the vehicle 40 may be a land vehicle, such a road vehicle, a car, an automobile, an off-road vehicle, a motor vehicle, a bus, a robo-taxi, a van, a truck or a lorry. Alternatively, the vehicle 40 may be any other type of vehicle, such as a train, a subway train, a boat or a ship. For example, the proposed concept may be applied to public transportation (trains, bus) and future means of mobility (e.g., robo-taxis).

As shown in Fig. 2 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 2 may comprise one or more optional additional features corresponding to one or more aspects mentioned in connection with the proposed concept or one or more examples described above (e.g., Fig. 1).

## Claims

1. A method (100) for maintaining a storage resource of an apparatus, wherein the apparatus is configured to allow an access to a vehicle, comprising:
receiving (110), from user equipment, a package signal indicative of an attestation package of the user equipment;
generating (120) usage data based on the package signal for a usage cycle of the vehicle;
storing (130) the usage data in a secure element of the apparatus; and
deleting (140) the usage data after the usage cycle of the vehicle.

2. The method (100) according to claim 1, further comprising:
obtaining a deny list indicative of a denied attestation package, for which an access to the vehicle is denied; and
storing the deny list in the secure element of the apparatus.

3. The method (100) according to claim 2, further comprising
if the package signal is indicative of a denied attestation package transmitting, to the user equipment, a delete signal indicative of a deletion of the attestation package.

4. The method (100) according to any of the preceding claims, further comprising:
obtaining an allow list indicative of an allowed attestation package, for which an access to the vehicle is allowed; and
storing the allow list in a storage medium of the apparatus.

5. The method (100) according to claim 4, further comprising
receiving, from the user equipment, a second factor signal indicative for a second factor authentication; and
editing the allow list based on the second factor signal.

6. The method (100) according to any one of the claims 4-5, further comprising
checking whether the package signal is indicative of an allowed attestation package of the allow list; and
if the package signal is indicative of an allowed package allowing an access to the vehicle for the user equipment.

7. The method (100) according to any combination of any one of the claims 2,3 with any one of the claims 4-6, further comprising
receiving information about a deletion of an allowed attestation package;
editing the allow list to delete the attestation packet from the allow list; and
edit the deny list to add the attestation package to the deny list.

8. An apparatus (30), comprising:
one interface (32) configured to communicate with user equipment; and
processing circuitry (34) configured to control the one interface (32) and to:
perform the method (100) according to any one of the claims 1 - 7.

9. A vehicle (40) comprising the apparatus according to claim 8.

10. A computer program having a program code for performing the method (100) according to any one of the claims 1 - 7, when the computer program is executed on a computer, a processor, or a programmable hardware component.

## Patentansprüche

1. Verfahren (100) zum Aufrechterhalten einer Speicherressource einer Vorrichtung, wobei die Vorrichtung konfiguriert ist, einen Zugang zu einem Fahrzeug zu ermöglichen, umfassend:
Empfangen (110) eines Paketsignals von einem Benutzergerät, das ein Attestierungspaket des Benutzergeräts anzeigt;
Erzeugen (120) von Nutzungsdaten basierend auf dem Paketsignal für einen Nutzungszyklus des Fahrzeugs;
Speichern (130) der Nutzungsdaten in einem sicheren Element der Vorrichtung; und
Löschen (140) der Nutzungsdaten nach dem Nutzungszyklus des Fahrzeugs.

2. Verfahren (100) nach Anspruch 1, ferner umfassend:
Erhalten einer Sperrliste, die ein gesperrtes Attestierungspaket anzeigt, für das ein Zugang zu dem Fahrzeug verweigert wird; und
Speichern der Sperrliste in dem sicheren Element der Vorrichtung.

3. Verfahren (100) nach Anspruch 2, ferner umfassend
falls das Paketsignal ein gesperrtes Attestierungspaket anzeigt, Übertragen eines Löschsignals an das Benutzergerät, das eine Löschung des Attestierungspakets anzeigt.

4. Verfahren (100) nach einem der vorhergehenden Ansprüche, ferner umfassend:
Erhalten einer Erlaubnisliste, die ein erlaubtes Attestierungspaket anzeigt, für das ein Zugang zu dem Fahrzeug erlaubt ist; und
Speichern der Erlaubnisliste in einem Speichermedium der Vorrichtung.

5. Verfahren (100) nach Anspruch 4, ferner umfassend
Empfangen eines Zweiten-Faktor-Signals von dem Benutzergerät, das eine Zwei-Faktor-Authentifizierung anzeigt; und
Bearbeiten der Erlaubnisliste basierend auf dem Zweiten-Faktor-Signal.

6. Verfahren (100) nach einem der Ansprüche 4-5, ferner umfassend Prüfen, ob das Paketsignal ein erlaubtes Attestierungspaket der Erlaubnisliste anzeigt; und
falls das Paketsignal ein erlaubtes Paket anzeigt, Erlauben eines Zugangs zu dem Fahrzeug für das Benutzergerät.

7. Verfahren (100) nach einer Kombination eines der Ansprüche 2, 3 mit einem der Ansprüche 4-6, ferner umfassend
Empfangen einer Information über eine Löschung eines erlaubten Attestierungspakets;
Bearbeiten der Erlaubnisliste zum Löschen des Attestierungspakets aus der Erlaubnisliste; und
Bearbeiten der Sperrliste zum Hinzufügen des Attestierungspakets zu der Sperrliste.

8. Vorrichtung (30), umfassend:
eine Schnittstelle (32), die konfiguriert ist, mit einem Benutzergerät zu kommunizieren; und
Verarbeitungsschaltung (34), die konfiguriert ist, die Schnittstelle (32) zu steuern und:
das Verfahren (100) nach einem der Ansprüche 1 - 7 auszuführen.

9. Fahrzeug (40), umfassend die Vorrichtung nach Anspruch 8.

10. Computerprogramm mit einem Programmcode zur Durchführung des Verfahrens (100) nach einem der Ansprüche 1 - 7, wenn das Computerprogramm auf einem Computer, einem Prozessor oder einer programmierbaren Hardwarekomponente ausgeführt wird.

## Revendications

1. Procédé (100) pour maintenir une ressource de stockage d'un appareil, dans lequel l'appareil est configuré pour permettre un accès à un véhicule, comprenant :
la réception (110), en provenance d'un équipement utilisateur, d'un signal de paquet indicatif d'un paquet d'attestation de l'équipement utilisateur ;
la génération (120) de données d'utilisation basées sur le signal de paquet pour un cycle d'utilisation du véhicule ;
le stockage (130) des données d'utilisation dans un élément sécurisé de l'appareil ; et
la suppression (140) des données d'utilisation après le cycle d'utilisation du véhicule.

2. Procédé (100) selon la revendication 1, comprenant en outre :
l'obtention d'une liste de refus indiquant un paquet d'attestation refusé, pour lequel un accès au véhicule est refusé ; et
le stockage de la liste de refus dans l'élément sécurisé de l'appareil.

3. Procédé (100) selon la revendication 2, comprenant en outre si le signal de paquet est indicatif d'un paquet d'attestation refusé, la transmission, à l'équipement utilisateur, d'un signal de suppression indicatif d'une suppression du paquet d'attestation.

4. Procédé (100) selon l'une quelconque des revendications précédentes, comprenant en outre :
l'obtention d'une liste d'autorisation indiquant un paquet d'attestation autorisé, pour lequel un accès au véhicule est autorisé ; et
le stockage de la liste d'autorisation dans un support de stockage de l'appareil.

5. Procédé (100) selon la revendication 4, comprenant en outre
la réception, en provenance de l'équipement utilisateur, d'un signal de second facteur indicatif d'une authentification à deux facteurs ; et
l'édition de la liste d'autorisation basée sur le signal de second facteur.

6. Procédé (100) selon l'une quelconque des revendications 4-5, comprenant en outre la vérification si le signal de paquet est indicatif d'un paquet d'attestation autorisé de la liste d'autorisation ; et
si le signal de paquet est indicatif d'un paquet autorisé, l'autorisation d'un accès au véhicule pour l'équipement utilisateur.

7. Procédé (100) selon une combinaison quelconque de l'une quelconque des revendications 2, 3 avec l'une quelconque des revendications 4-6, comprenant en outre
la réception d'informations concernant une suppression d'un paquet d'attestation autorisé ;
l'édition de la liste d'autorisation pour supprimer le paquet d'attestation de la liste d'autorisation ; et
l'édition de la liste de refus pour ajouter le paquet d'attestation à la liste de refus.

8. Appareil (30), comprenant :
une interface (32) configurée pour communiquer avec un équipement utilisateur ; et
un circuit de traitement (34) configuré pour commander l'interface (32) et pour :
exécuter le procédé (100) selon l'une quelconque des revendications 1 - 7.

9. Véhicule (40) comprenant l'appareil selon la revendication 8.

10. Programme d'ordinateur ayant un code de programme pour exécuter le procédé (100) selon l'une quelconque des revendications 1 - 7, lorsque le programme d'ordinateur est exécuté sur un ordinateur, un processeur ou un composant matériel programmable.
